# EUROPEAN PATENT SPECIFICATION

(11) **EP 2 988 615 B1**
(45) Date of publication and mention of the grant of the patent: **02.10.2019**
(21) Application number: 14712686.6
(22) Date of filing: 27.03.2014
(51) Int. Cl.: A23L 33/10, A23L 33/21, A23L 29/212, A23L 29/262, A23L 33/00

(54) **COMPOSITIONS FOR USE IN NUTRITION OF DYSPHAGIA PATIENTS**
ZUSAMMENSETZUNGEN ZUR VERWENDUNG FÜR DIE ERNÄHRUNG VON DYSPHAGIEPATIENTEN
COMPOSITIONS POUR UTILISATION DANS LA NUTRITION DE PATIENT SOUFFRANT DE DYSPHAGIE

(30) Priority: 28.03.2013 EP 13161643
(43) Date of publication of application: 02.03.2016
(73) Proprietor: Fresenius Kabi Deutschland GmbH, 61352 Bad Homburg (DE)
(72) Inventor: GALLEGOS-MONTES, Crispulo, 61352 Bad Homburg (DE); BRITO-DE-LA FUENTE, Edmundo, 61381 Friedrichsdorf (DE); QUINCHIA-BUSTAMANTE, Lida A., 61352 Bad Homburg (DE); PESTANA, Ericka A., 60320 Frankfurt am Main (DE); STAUDINGER-PRÉVOST, Nadège, 64319 Pfungstadt-Hahn (DE); ASSEGEHEGN, Getachew, 61350 Bad Homburg (DE)
(74) Representative: Fresenius Kabi Deutschland GmbH
(86) International application number: PCT/EP2014/056131
(87) International publication number: WO 2014/154793

(56) References cited:
- WO-A1-2006/054886
- WO-A1-2008/137181
- WO-A1-2012/117065
- WO-A1-2013/025202
- WO-A2-2011/056487

## Description

### FIELD OF THE INVENTION

The present disclosure is concerned with improving and maintaining the health of patients suffering from dysphagia by providing especially adapted nutrition. In particular, the disclosure relates to the formulation and processing of new food thickeners with improved viscosity adaption over extended periods of time.

### BACKGROUND OF THE INVENTION

Dysphagia is a common health problem, the term describing a range of mechanical disorders that affect the safety, efficiency, or quality of eating and drinking. In dysphagia, every swallowing attempt bears the danger of choking and aspiration of liquids or food particles into the lung. Hence, dysphagia patients have an increased risk of developing aspiration pneumonia, which may even lead to death. Furthermore, dehydration, malnutrition, and often a reduced quality of life are direct consequences of dysphagia.

For example, dysphagia patients are often afraid to consume foods that appear too thin to them because they fear to choke. This fear is particularly pronounced with respect to liquids and often leads to reluctance to eat or drink and may therefore lead to dehydration and malnutrition.

In particular in elderly patients, senses like smell and taste are often already decreased. In such a situation, even slight dysphagia may lead to complete food refusal followed by consequences such as weight loss, dehydration and further reduction in general health.

In the transport of a food or liquid bolus during swallowing, the saliva plays an important role in lubricating the mouth and aids the formation of a cohesive bolus. This swallowing process is significantly affected by material flow properties, i.e. viscosity. Accordingly, when patients experience difficulties in swallowing, it is crucial to comply with clinically required levels of viscosity of liquid/semisolid products for use in nutrition for such patients. This is typically achieved by addition of food thickeners. For example, WO2006/054886A1 discloses a food thickener comprising starch and a combination of xanthan gum with galactomannan (tara gum).

Currently available commercial food thickener products are often starch-based.

These starch-based thickeners are safe, easy to use and thus widely applied to reach adequate viscosity levels in food preparations, such as drinks, for treatment of individuals suffering from dysphagia.

However, during consumption, individuals suffering from dysphagia often spill saliva into their food and, additionally, may take very long time to consume their foods/drinks. Also, during bolus formation, the food is mixed with saliva. One drawback of starch thickened patient nutrition is that contact with saliva may lead to a fast decrease of the viscosity of the thickened nutrition.

Thus, there is a general need for products suitable to maintain a required level of viscosity over prolonged periods of time and up to and during the actual swallowing process, e.g. over the entire duration of a meal. Moreover, it is desirable, to provide thickener products that are suitable for preparing hot and cold foods and drinks. It is also desirable that thickener products are suitable to be used for a wide variety of food types, such as vegetarian and meat containing products. Additional needs in the art which are addressed by the invention will become apparent hereinafter.

### SUMMARY OF THE INVENTION

The present invention relates to food thickener compositions, nutritional compositions comprising them, their use in treatment and to a method for providing patient nutrition as set out in the claims.

In a first aspect, the present disclosure relates to a food thickener composition for adding to a nutritional product comprising
a. a polyphenol viscosity stabilizer,
b. a starch,
c. a cellulose and
d. one or more additives, wherein the thickener composition comprises maltodextrin as an additive.

In a second aspect, the present disclosure relates to a food thickener composition for adding to a nutritional product comprising
a. a polyphenol viscosity stabilizer,
b. a starch,
c. a gum,
d. a cellulose and
e. one more additives, wherein the thickener composition comprises maltodextrin as an additive.

In particular, the present disclosure relates to a food thickener composition for use in the nourishment of dysphagia patients, in the treatment of dysphagia as well as in the treatment or prophylaxis of malnutrition or dehydration in dysphagia patients.

In a third aspect, the present disclosure relates to a nutritional composition comprising such a food thickener composition.

In a fourth aspect, the present disclosure relates to a method for thickening patient food comprising the following steps:
a. providing the patient food in liquid or fluid form, e.g. by pureeing;
b. adding the thickener composition of the first aspect;
c. mixing the thickener composition with the patient food.

### DESCRIPTION OF THE FIGURES

Fig. 1 shows the effect of artificial saliva on a starch-based thickener for three different textures, Nectar, Honey and Pudding. After the addition of artificial saliva, the viscosity of the thickened solutions decreased up to three orders of magnitude within a few seconds.
Fig. 2 shows the effect of artificial saliva on a solution thickened to honey stage with a starch-based thickener comprising different concentrations of tannic acid as polyphenol viscosity stabilizer. The amount of viscosity stabilizer is given in wt% based on the total amount of thickened composition.
Fig. 3 shows the effect of artificial saliva on a solution thickened to pudding consistency with a starch-based thickener for two different concentrations of tannic acid as viscosity stabilizer.
The amount of viscosity stabilizer is given in wt% based on the total amount of thickened composition.
Fig. 4 shows the effect of artificial saliva on solutions thickened to honey stage with a starch-based thickener comprising different polyphenol viscosity stabilizers (tannic acid, red wine extract, black tea extract, grape seed extract, green tea extract).
Fig. 5 shows a comparison of the effects of artificial saliva with real human saliva on a solution thickened with a starch-based thickener with (empty symbols) and without black tea extract (filled symbols) as viscosity stabilizer.
Fig. 6 shows the effect of artificial saliva on a solution thickened to honey stage with a cellulose-based thickener powder that contains black tea extract as viscosity stabilizer. This thickener powder contains 70% HPMC, 20% chemically modified maize starch, and 10% maltodextrin. It also contains black tea extract as viscosity stabilizer with a black tea extract/starch ratio of 0.030:1 (wt/wt).
Fig. 7 shows a comparison of the effects of human saliva on water thickened with 1.4 wt% of the thickening composition according to example 6 and on water thickened with 4.5 wt% of a starch based thickener comprising 99.7 wt% modified Maize starch and 0.3 wt% maltodextrin.

### DETAILED DESCRIPTION OF THE INVENTION

"Dysphagia" as used herein refers to diagnosed abnormalities, such as difficulties, in the swallowing process.

"Starch" is a polysaccharide carbohydrate found in various natural sources, such as corn, maize, wheat, rice, potato and tapioca. Starch is comprised of two polysaccharides, amylose and amylopectin. Amylose is comprised of long unbranched chains of D-glucose units bound in alpha (1,4) linkages. Amylopectin is a highly branched structure, also made up of D-glucose units.

"Modified starch" as used herein refers to starch obtained from natural sources after having been subjected to a modification process. The modification process can be a chemical process (such as partial acid hydrolysis, partial enzymatic hydrolysis, alkali treatment, oxidation/bleaching or derivatization processes (such as etherification, esterification, crosslinking, dual modification)) or a physical process (such as heat/moisture treatment, pregelatinization).

Food grade starches are subjected to a modification process mainly to increase paste consistency, smoothness and clarity, and to impart freeze-thaw and cold storage stabilities. In addition to this, modified starches have good stability against acid, thermal and mechanical degradation. In the context of this invention, modified starches are food grade natural starches that are modified in either of the above modification processes and can be obtained in numerous suppliers. Preferred starch thickeners are chemically modified starches, such as chemically modified maize or tapioca starch.

"Ready-to-use" refers to the final form of nutrition, e.g. foods, drinks or nutritional compositions, as served to a patient or any other subject in need thereof. The term may be used in connection with patient food, nutritional compositions and patient nutrition.

"Nutritional composition" herein refers to a synthetically produced food composition. Nutritional compositions as used herein typically are provided in the form of powder, drinks, gels, energy bars and the like. Thus, nutritional compositions are artificial nutritional products obtained by mixing / dissolving ingredients whereby said ingredients are typically provided in solid form (e.g. powders) or liquid from. The term "nutritional compositions" excludes "patient food", i.e. non-modified natural food products, such as meat, vegetables, fruits in their natural form and conventionally prepared (e.g. cooked) meals or drinks like tea, coffee or juices. "Patient nutrition" as used herein refers to nutrition intended for individuals suffering from a medical condition. Patient nutrition may be provided in the form of conventionally prepared meals (patient food) or in form of nutritional compositions as defined above. Herein, patient nutrition is intended for individuals having difficulties swallowing, in particular dysphagia. "Polyphenol" refers to a structural class including natural, synthetic or semi-synthetic, organic chemicals characterized by the presence of multiple phenol structural units being covalently bound to each other, either directly or via other chemical subgroups. As used herein "semi-synthetic" refers to compounds obtained by chemical synthesis using starting materials isolated from natural sources, such as plant material or bacterial or cell cultures. Typically, polyphenols comprise >12 phenolic hydroxyl groups. Preferably, polyphenols have a molecular weight of 500-4000 Da and/or comprise 5-7 aromatic rings per 1000 Da. The polyphenols used herein are typically provided in form of plant derived polyphenols, such as plant extracts. Such plant extracts may for example be obtainable by solvent extraction using ethanol, methanol or their mixtures with water.

"Viscosity stabilizer" as used herein refers to compounds having the ability of reducing or preventing an unintended change in viscosity of thickened nutritional products for a certain period of time. For example, a viscosity stabilizer may dampen the decrease in viscosity of thickened nutritional products. Suitable viscosity stabilizers are polyphenols and may be selected from tannic acid, green tea extract, grape seed extract, red wine extract, and black tea extract, flavonols, quercetins (such as quercetin, rutin), flavones (such as luteolin, scutellarein, eupafolin), flavanones, proanthocyanidins (such as catechin, catechin hydrate, catechin gallato, epicatechin gallato, epicatechin gallate, theaflavin) and tannins (such as strictinin). Preferred viscosity stabilizers herein are phenolic plant extracts. Particularly preferred are tannic acid, green tea extract, grape seed extract, red wine extract, and black tea extract and mixtures thereof.

"Tannins" as used herein refers to a water-soluble group of polyphenols. Typically, tannins are obtained from plants. Tannins are often characterized by their ability to precipitate proteins. Herein, it will be distinguished between hydrolysable and non-hydrolysable (condensed) tannins. "Tannic acid" as used herein refers to a species of the group of tannins (genus). For example, tannic acid refers to the hydrolysis products of hydrolysable tannins. Exemplary hydrolysable tannins are glucose tannins in which one or more of the hydroxyl groups of glucose are esterified with gallic acid and/or meta-digallic acid. Commercial tannic acid may for example be extracted from any of the following: Tara pods (Caesalpinia spinosa), gallnuts from Rhus semialata or Quercus infectoria or Sicilian Sumac leaves (Rhus coriaria).

"Thickener composition" as used herein refers to a food grade composition suitable to thicken various nutritional products.

"Starch" as used herein refers to a food grade starch or modified starch which is used in nutritional products.

"Starch-based thickener" refers to a thickener composition comprising at least 50 wt%, at least 70wt% or at least 90wt% of starch. A starch-based thickener may for example also comprise up to 45wt% of cellulose.

"Cellulose" refers to food grade cellulose or modified cellulose which is used in nutritional products.

"Cellulose-based thickener" refers to a thickener composition comprising at least 50 wt%, at least 70wt% or at least 90wt% of cellulose. A cellulose-based thickener may for example also comprise up to 45wt% of a starch.

"Gum" as used herein refers to a food grade gum which is used to thicken nutritional products, e.g. to Xanthan or Gellan gum or to a vegetable gum such as gum Arabic, guar gum or agar.

"Food grade" as used herein refers to components that are fit for human consumption not injurious to health (e.g. safe food according to Article 14 of the regulation (EC) N° 178/2002 on general food law).

"Additives" are typically present in an amount of less than 15wt% based on the total weight of the thickener composition.

A composition "consisting of" a number of ingredients or components is to be understood as comprising no other than the named ingredients or components. In case ranges for amounts of ingredients or components are given, the individual amount of all ingredients or components within the composition has of course also to be adapted such that the sum of all amounts of all present ingredients or components adds up to 100 wt%.

### Swallowing mechanism (in humans)

Swallowing is a complex mechanism using both skeletal muscle (tongue) and smooth muscles of the pharynx and esophagus. In particular, swallowing comprises three phases:
- An oral phase
- A pharyngeal phase and
- An esophageal phase.

Each phase is controlled by different (neurological) mechanisms. The autonomic nervous system coordinates this process in the pharyngeal and the esophageal phases.

The **oral phase** is voluntary and mainly controlled by the medial temporal lobes and limbic system of the cerebral cortex with contributions from the motor cortex and other cortical areas. The oral phase comprises the formation of the bolus. Herein, bolus refers to food being ready to enter the pharyngeal phase. During bolus formation, food is contacted with saliva from the salivary glands and chewed (i.e. broken down by the teeth). This part of the swallowing process, in particular the bolus formation, is significantly affected by material flow properties, such as viscosity. When ready for swallowing, the bolus moves towards the back of the tongue.

Once the bolus reaches the palatoglossal arch of the oropharynx, the pharyngeal phase, a reflex often also referred to as gag reflex begins. The reflex is initiated by touch receptors in the pharynx as a bolus of food is pushed to the back of the mouth by the tongue and subsequently is coordinated by the swallowing center in the medulla oblongata and pons. For the pharyngeal phase to work properly all other egress from the pharynx must be occluded - this includes the nasopharynx and the larynx. When the pharyngeal phase begins, other activities such as chewing, breathing, coughing and vomiting are concomitantly inhibited.

At the end of the **pharyngeal phase** the bolus moves down towards the esophagus by pharyngeal peristalsis which takes place by sequential contraction of the superior, middle and inferior pharyngeal constrictor muscles. The velocity through the pharynx depends on a number of factors such as viscosity and volume of the bolus.

Like the pharyngeal phase of swallowing, the **esophageal phase** of swallowing is under involuntary neuromuscular control. However, propagation of the food bolus is slower than in the pharynx. The bolus enters the esophagus and is propelled downwards first by striated muscle (recurrent laryngeal) then by the smooth muscle. The upper esophageal sphincter relaxes to let food pass, after which various striated constrictor muscles of the pharynx as well as peristalsis and relaxation of the lower esophageal sphincter sequentially push the bolus of food through the esophagus into the stomach.

### Dysphagia

Abnormalities in swallowing in any of the above described phases will be referred to as dysphagia. Dysphagia is typically developed as a consequence of weakness or complete lack of coordination in the mouth and throat muscles. More specifically, abnormalities of the pharynx and/or oral cavity may lead to oropharyngeal dysphagia, whereas abnormalities of the esophagus may lead to esophageal dysphagia.

Typical causes of dysphagia are stroke, motor neuronal diseases, Parkinson's disease, cerebral palsy, head injuries, multiple sclerosis, surgery to the head and neck or myasthenia gravis. For example, swallowing becomes a great concern for the elderly since strokes and Alzheimer's disease can interfere with the autonomic nervous system.

Generally, patients suffering from dysphagia are at an increased risk of impaired nutritional status, aspiration pneumonia, dehydration and a generally reduced quality of life.

More specifically, in dysphagic patients, every swallowing attempt bears the danger of choking and aspiration of liquid or food particles into the lung. Hence, dysphagia patients have an increased risk of developing aspiration pneumonia, which may even lead to death. Furthermore, dehydration, malnutrition, and often a reduced quality of life are direct consequences of dysphagia.

Particularly in elderly patients, senses like smell and taste are often already decreased. In such a situation, even slight dysphagia may lead to complete food refusal followed by consequences such as weight loss, dehydration and further reduction in general health. It has however to be understood that abnormalities in swallowing are not necessarily limited to elderly patients.

### Management and treatment of dysphagia

Management of dysphagia as used herein refers to a part of the treatment of dysphagia which does not directly relate to treating the cause of dysphagia, but ameliorating and/or controlling its symptoms. Management of dysphagia commonly comprises the prescription of texture-controlled diets; such diets include, for example, pureed foods and drinks of higher viscosity. The rationale behind altering or modifying the consistency of foods and/or drinks is to change the rate at which food is transported through the pharynx and, thus, to reduce the risk of aspiration. Ideally, the most appropriate modification of food consistencies should follow from a clear assessment of the swallowing problem. However, this is not possible in all cases and quite often health care professionals rely on national guidelines for the dietary management of dysphagia patients. To give some examples, the national guidelines given by the British Dietetic Association provides a subjective explanation of three different consistencies, "Nectar", "Honey" and "Pudding", according to which foods/drinks should be texturally modified in dysphagia management.
Stage 1: - can be drunk through a straw
   - can be drunk from a cup if advised or preferred
   - leaves a thin coat on the back of a spoon
Stage 2: - cannot be drunk through a straw
   - can be drunk from a cup
   - leaves a thick coat on the back of a spoon
Stage 3: - cannot be drunk through a straw
   - cannot be drunk from a cup
   - needs to be taken with a spoon

The American Dietetic Association, on the other hand, defines ranges of viscosity for different consistencies at a single shear rate of 50 s¹ and 25 °C. The proposed rage of viscosities are: (1) Thin: 1-50 centipoise; (2) Nectar-like: 51-350 centipoise; (3) Honey-like: 351-1750 centipoise; (4) Spoon-thick (pudding): greater than1750 centipoise.

In any case, pureed foods are often of unappetizing and non-adjustable consistency, hence there is a general need of controlling the viscosity of such foods.

When a person eats and drinks, saliva is mixed into the bolus in the mouth. The presence of or contact with saliva typically leads to a decrease in the viscosity of food and drinks. In particular, in nutrition comprising starch-based thickeners, a decrease in viscosity over time after contact with saliva is often observed. This can for example result in the following problems:
a. A rapid decrease in bolus viscosity during bolus formation and swallowing; and / or
b. Saliva entering e.g. a cup comprising a food or drink which is gradually consumed over a prolonged period of time by a dysphagic patient and thereby "contaminating" the drink, leading to a dramatic decrease in fluid viscosity over time.

Consequently, the present invention relates inter alia to the development of novel compositions, such as powdered and / or instant compositions for use in preparing nutrition for dysphagia patients.

It is desirable that such compositions are suitable for cold and hot nutritional compositions, drinks and foods. Furthermore, it may be desirable that nutritional products after having been thickened with compositions according to the present disclosure may be stored for a while before being served to a patient suffering from dysphagia. Accordingly, it may be desirable that the thickened nutrition is freeze-stable and may be re-heated. Moreover, it may be desirable to provide food thickener compositions that are suitable for vegetarian, vegan and omnivore nutritional products. In particular, it may be desirable to provide thickener compositions which are adapted for use with compositions comprising animal protein or vegetable protein or mixtures thereof.

The polyphenol viscosity stabilizer, the thickener composition and the nutritional compositions herein are suitable for use in treatment including management of dysphagia with respect to swallowing problems associated with any of the oral phase, pharyngeal phase and/or esophageal phase. The polyphenol viscosity stabilizer, the thickener composition and the nutritional compositions herein are particularly suitable for use in treatment of dysphagia with respect to swallowing problems associated with any of the oral phase and/or pharyngeal phase.

### Starch

The nutrition or thickener composition of the present disclosure may comprise starch or modified starch. For example, the starch may be food grade starch that can be commercially obtained from numerous suppliers. Besides starch from potatoes, suitable starches may be arrowroot, maize-, corn, rice, sago, katakuri, wheat and tapioca starch. For example a suitable starch is maize starch. Preferably, the starch is selected from the group consisting of modified starches.

Suitable modified starches are oxidised starch, mono-starch phosphate, di-starch phosphate, phosphorylated di-starch phosphate, acetylated di-starch phosphate, acetylated starch, acetylated di-starch adipate, hydroxypropylstarch, hydroxypropyl di-starch phosphate, starch sodium octenyl succinate, acetylated oxidised starch.

In a preferred embodiment, the starch is chemically-modified maize or tapioca starch.

### Gum

The thickener composition of the present disclosure may comprise gum. For example the gum may be a food grade gum such as gum Arabic, agar, guar gum Gellan or Xanthan gum. Xanthan gum is especially preferred.

### Cellulose

The cellulose herein may be non-modified cellulose, but preferably is chemically-modified cellulose. Preferred chemically-modified celluloses herein are alkylated celluloses (celluloseethers) including methyl cellulose, ethyl cellulose, hydroxypropyl cellulose, hydroxypropylmethylcellulose (HPMC), methylethylcellulose, carboxymethylcellulose. HPMC is considered very suitable as it passes essentially unchanged through the gastrointestinal tract following oral administration. HPMC exerts functional changes in food products without undergoing or initiating chemical changes that would alter the nutritional value of the food products.

### Polyphenol viscosity stabilizer

Suitable polyphenol viscosity stabilizers are polyphenols and may be selected from tannic acid, green tea extract, grape seed extract, red wine extract, and black tea extract, flavonols, quercetins (such as quercetin, rutin), flavones (such as luteolin, scutellarein, eupafolin), flavanones, proanthocyanidins (such as catechin, catechin hydrate, catechin gallato, epicatechin gallato, epicatechin gallate, theaflavin) and tannins (such as strictinin). Preferred viscosity stabilizers herein are phenolic plant extracts. Particularly preferred are tannic acid, green tea extract, grape seed extract, red wine extract, and black tea extract and mixtures thereof.

The weight ratio of polyphenol viscosity stabilizer to starch within the thickener composition may be at least 0.001:1 or 0.002:1, preferably at least 0.010:1 or at least 0.015:1, more preferably at least 0.020:1 or at least 0.030:1, for example at least 0.100:1. Advantageously, the weight ratio of polyphenol viscosity stabilizer to starch within the thickener composition does not exceed 0.200:1.

### Thickener composition

The thickener composition herein comprises a polyphenol viscosity stabilizer, a starch, a cellulose, and one or more additives, wherein the thickener composition comprises maltodextrin as an additive.

In a first exemplary embodiment, the thickener composition may be cellulose based and, in a first example, comprise or consist of
a. 60-80 wt% of cellulose, such as chemically modified cellulose, for example hydroxypropyl methylcellulose (HPMC), based on the total weight of the thickener composition,
b. 18-38 wt% of starch, such as chemically modified starch, for example chemically modified maize starch based on the total weight of the thickener composition,
c. the polyphenol viscosity stabilizer and
d. 1-10 wt% maltodextrin as additive based on the total weight of the thickener composition, and, optionally,
e. one or more further additives.

In a second example of the first embodiment, the thickener composition may be cellulose based and, in a first example, comprise or consist of
a. 70-75 wt% of cellulose, such as chemically modified cellulose, for example hydroxypropyl methylcellulose (HPMC), based on the total weight of the thickener composition,
b. 20-24 wt% of starch, such as chemically modified starch, for example chemically modified maize starch based on the total weight of the thickener composition,
c. the polyphenol viscosity stabilizer and
d. 5-8 wt% maltodextrin as additive based on the total weight of the thickener composition, and, optionally,
e. one or more further additives.

In a second exemplary embodiment, the thickener composition may be starch based and, in a first example comprise or consist of
a. 60-90wt% of starch, such as chemically modified starch, for example chemically modified maize starch, based on the total weight of the thickener composition,
b. 5-40 wt% of cellulose, such as chemically modified cellulose, for example hydroxypropyl methylcellulose (HPMC), based on the total weight of the thickener composition,
c. the polyphenol viscosity stabilizer and
d. 1-10 wt% maltodextrin as additive based on the total weight of the thickener composition, and, optionally,
e. one or more further additives.

In a second example of the second embodiment, the thickener composition may be starched based and comprise or consist of
a. 70-80 wt% of starch, such as chemically modified starch, for example chemically modified maize starch, based on the total weight of the thickener composition,
b. 10-20wt% of cellulose, such as chemically modified cellulose, for example hydroxypropyl methylcellulose (HPMC), based on the total weight of the thickener composition,
c. the polyphenol viscosity stabilizer and
d. 5-8 wt% maltodextrin as additive based on the total weight of the thickener composition, and, optionally,
e. one or more further additives.

In a third embodiment, the thickener composition may be starch based and comprise a polyphenol viscosity stabilizer, a starch, a cellulose, a gum, and one or more additives, wherein the thickener composition comprises maltodextrin as an additive.

In a first example of the fourth embodiment the thickener composition may comprise or consist of
a. 30-55 wt% of a starch, such as chemically modified starch, for example chemically modified tapioca starch, based on the total weight of the thickener composition,
b. 25-55 wt% of a gum, for example Xanthan gum, based on the total weight of the thickener composition,
c. 2-15 wt% of a cellulose, such as chemically modified cellulose, for example hydroxypropyl methylcellulose (HPMC), based on the total weight of the thickener composition,
d. a polyphenol viscosity stabilizer,
e. 1-20 wt% maltodextrin as additive based on the total weight of the thickener composition, and, optionally,
f. one or more further additives.

In a second example of the third embodiment the thickener composition may comprise or consist of
a. 30-55 wt%, preferably 35-45 wt%, more preferably 39-40 wt% of a starch, preferably chemically modified tapioca starch, based on the total weight of the thickener composition,
b. 25-55 wt%, preferably 30-50 wt%, more preferably 35-45 wt%, most preferably 39-40 wt% of a gum, preferably Xanthan gum, based on the total weight of the thickener composition,
c. 2-15 wt%, preferably 5-10 wt%, more preferably 8-9 wt% of a cellulose, preferably hydroxypropyl methylcellulose (HPMC), based on the total weight of the thickener composition,
d. 0.01-1 wt%, preferably 0.01-0.1 wt%, more preferably 0.05 wt% of a polyphenol viscosity stabilizer, preferably tannic acid,
e. 1-20 wt%, preferably 10-20 wt%, more preferably 14-15 wt% maltodextrin as additive based on the total weight of the thickener composition.

It has been found that the thickener composition when comprising a cellulose, is particularly suitable for warm patient food or warm nutritional compositions, e.g. having a temperature of more than 40°C. Nevertheless, the patient food / nutritional compositions may be left to cool after thickening.

Moreover, it has been found that the thickener composition when comprising a cellulose is particularly suitable to prepare patient food or nutritional compositions comprising animal protein.

### Nutritional compositions

A nutritional composition may comprise protein, fat and carbohydrates in a predetermined and controllable amount. Optionally, such a nutritional composition may comprise further components such as dietary fibre and/or further ingredients known as food additives.

Typically, proteins are included in the nutritional compositions as amino acid source. The proteins included may be from different sources such as vegetable or animal sources. Suitable proteins can be selected from the list consisting of milk protein, such as casein or whey protein, soy protein, pea proteins and hydrolisates thereof. Amino acids may as well be added in their chemical form or in the form of peptides.

Fat from different sources, such as animal and vegetable fat, may be included in the nutritional composition. The fat may include fatty acids, such as polyunsaturated fatty acids, monounsaturated fatty acids and polyunsaturated fatty acids. Suitable fatty acids may be selected form the group consisting of caproic acid (C6:0), caprylic acid (C8:0), capric acid (C10:0), lauric acid (C12:0), myristic acid (C14:0), palmitic acid (C16:0), palmitoleic acid (C16:1w7), stearic acid C18:0, oleic acid (C18:1w9), linoleic acid (C18:2w6), α-Linolenic acid (C18:3w3), eicosapentaenoic acid (C20:5w3), docosahexaenoic acid C22:6w3 and mixtures thereof. In addition to said fatty acids, C6-C12 medium chain triglycerides may be added.

Typical carbohydrate sources may be selected from the list consisting of maltodextrine, glucose syrup, sucrose, starch, isomaltolose, fructose and mixtures thereof.

In addition, the nutritional composition herein may comprise ingredients specifically as dietary fibres. Suitable dietary fibres may be selected from the group consisting of cocoa powder, inulin, wheat dextrine, cellulose, microcrystalline cellulose, soy polysaccharides, tapioca dextrine, xanthan, fructooligosaccharides, galactooligosaccharides, at least partially hydrolized guar gum, acacia gum, pectin, oat fibre, poly dextrose, resistant starch, hemicellulose and mixtures thereof. A nutritional composition according to the present disclosure may for example comprise water, sucrose, milk protein, vegetable oils, emulsifier (such as soya lecithin), maltodextrin, inulin (for example obtained from chicory), vitamins, mineral and trace elements in predefined amounts. In addition, thickeners and optional ingredients as specified below may be added.

The nutritional compositions will typically be provided in an oil-in-water emulsion (O/W). Such an emulsion may be adapted to have an energy content of 0.5-5kcal/mL, preferably between 1 and 3kcal/mL, most preferred between 1.5 and 2kcal.

Nutritional compositions optionally comprise food additives. Food additives may for example be selected from the group consisting of choline, beta-carotene, lutein, lucopene, caffeine, lecithin, taurine, carnitine, myo-inositol, stabilisers, emulsifiers, colorants, aroma and mixtures thereof. Aromas may be caramel, vanilla, yoghurt, chocolate, coffee, cappuccino or fruit aromas.

A typical nutritional composition herein comprises the thickener composition described herein and the following nutrient profile:
a. 5-15 wt%, preferably 8-12 wt%, protein,
b. 8-25 wt%, preferably 10-20 wt%. carbohydrates,
c. 5-10 wt%, preferably 6-8 wt%, fat, and optionally
d. 0.5-3 wt%, preferably 0.7-2.5 et% of dietary fibre.

Moreover, the nutritional composition typically comprises water and optionally further food additives.

### Preparation of patient nutrition

The present disclosure also relates to a method for thickening patient food comprising the following steps:
a. providing the patient food in liquid or fluid form, e.g. by pureeing;
b. adding the thickener composition described herein;
c. mixing the thickener composition with the patient food.

### Soaking solution

The thickener composition as described herein may be used to prepare a soaking solution to be served with or used on cake, biscuits, bread or the like. A typical soaking solution will comprise 50 - 150 mL liquid, such as water, fruit juice or coffee and about 520g of thickener composition. The soaking solution should be mixed thoroughly, e.g. by whisking, before use. Cake, biscuits, bread or the like may be soaked in the soaking solution and may be put in the refrigerator for about 2 hours before serving.

### Exemplary embodiments

1. A food thickener composition for adding to a nutritional product comprising or consisting of
   a) a polyphenol viscosity stabilizer,
   b) a starch,
   c) a cellulose, and
   d) one or more additives, wherein the thickener composition comprises maltodextrin as an additive..
2. The thickener composition according to embodiment 1, wherein the weight ratio of polyphenol viscosity stabilizer to starch is at least 0.001:1 or at least 0.002:1, preferably at least 0.010:1, more preferred at least 0.015:1, even more preferred at least 0.020:1, most preferred at least 0.030:1, for example at least 0.100:1.
3. The thickener composition according to any of the preceding embodiments, wherein the polyphenol viscosity stabilizer is comprised in an amount of 0.01-1 wt%, preferably 0.01-0.1 wt%, more preferably 0.05 wt% based on the total weight of the thickener composition.
4. The thickener composition according to any of the preceding embodiments, wherein the weight ratio of cellulose to starch is from 1.50:1 - 4.00:1, preferably from 2.00:13.75:1, more preferred 2.30:1-3.00:1.
5. The thickener composition according to any of the preceding embodiments, wherein the weight ratio of cellulose to starch is from 0.05:1- 0.30:1, preferably from 0.10:10.20:1.
6. The thickener composition according to any of the preceding embodiments, wherein the total amount of starch is at least 20 wt%, or at least 25 wt%, preferably 30-55 wt%, more preferably 35-45 wt%, most preferably 39-40 wt% based on the total weight of the thickener composition.
7. The thickener composition according to any preceding claim comprising up to 98 wt%, for example 90-98wt% starch, based on the total weight of the thickener composition.
8. The thickener composition according to any of the preceding embodiments, wherein the total amount of cellulose is 5-75 wt% based on the total weight of the thickener composition.
9. The thickener composition according to any of embodiments 1-6 wherein the total amount of cellulose is 60-75wt% based on the total weight of the thickener composition.
10. The thickener composition according to any of the preceding embodiments, wherein the total amount of cellulose is 5-20 wt% based on the total weight of the thickener composition.
11. The thickener composition according to any of the preceding embodiments, wherein the cellulose is comprised in an amount of 2-15 wt%, preferably 5-10 wt%, more preferably 8-9 wt% based on the total weight of the thickener composition.
12. The thickener composition according to any of the preceding embodiments wherein maltodextrin is present as an additive in a total amount of 1-20 wt%, more preferably in a total amount of 10-20 wt%, most preferably 14-15 wt% based on the total weight of the thickener composition.
13. The thickener composition according to any of the preceding embodiments, wherein the viscosity stabilizer is selected from the group consisting of tannic acid, green tea extract, grape seed extract, red wine extract, black tea extract, flavonols, quercetins (such as quercetin, rutin), flavones (such as luteolin, scutellarein, eupafolin), flavanones, proanthocyanidins (such as catechin, catechin hydrate, catechin gallato, epicatechin gallato, epicatechin gallate, theaflavin), and tannins (such as strictinin).
14. The thickener composition according to any of the preceding embodiments, wherein the polyphenol viscosity stabilizer is selected from the group consisting of tannic acid, green tea extract, black tea extract, red wine extract, grape seed extract and mixtures thereof.
15. The thickener composition according to any of the preceding embodiments, wherein the starch is a chemically modified starch, preferably chemically modified maize starch.
16. The thickener composition according to any of the preceding embodiments, wherein the starch is a chemically modified starch, preferably chemically modified tapioca starch.
17. The thickener composition according to any of the preceding embodiments, wherein the cellulose is a chemically modified cellulose, preferably hydroxypropylmethyl cellulose.
18. The thickener composition according to any of the preceding embodiments, wherein the thickener composition is provided in form of a water soluble powder.
19. The thickener composition according to any of the preceding embodiments, wherein the total amount of further additives is from 0.01 or from 0.5wt% or from 1wt% to 15 wt%, or up to 10wt%, preferably up to 5wt% , more preferred up to 2wt% based on the total weight of the thickener composition.
20. The thickener composition according to any of the preceding embodiments further comprising a gum.
21. The thickener composition according to embodiment 20, wherein the gum is comprised in an amount of 25-55 wt%, preferably 30-50 wt%, more preferably 35-45 wt%, most preferably 39-40 wt% based on the total weight of the thickener composition.
22. The thickener composition according to embodiment 20 or 21, wherein the gum is selected from the group consisting of agar, gum Arabic, guar gum, Gellan gum and Xanthan gum.
23. The thickener composition according to any of the embodiments 20 to 22, wherein the gum is Xanthan gum.
24. The thickener composition according to any of the preceding embodiments comprising 39.2 wt% modified tapioca starch, 39.1 wt% Xanthan gum, 14.65 wt% Maltodextrin, 7 wt% HPMC and 0.05 wt% tannic acid.
25. A food thickener composition according to any of the embodiments 1-24 for use in the treatment of dysphagia.
26. A food thickener composition according to any of the embodiments 1-24 for use in the treatment or prophylaxis of malnutrition or dehydration in patients suffering from dysphagia.
27. A food thickener composition according to any of the embodiments 1 to 24 for use in the prophylaxis of aspiration pneumonia.
28. A food thickener composition according to any of the embodiments 1 to 24 for use in the nutrition of patients suffering from dysphagia.
29. Nutritional composition comprising the food thickener composition according to any of the embodiments 1 to 24.
30. Nutritional composition according to embodiment 29, comprising protein, carbohydrate and fat.
31. The nutritional composition of embodiments 29 or 30, wherein the nutritional composition is provided in from of a powder or a liquid, such as a ready-to-use liquid.
32. Method for providing patient nutrition comprising the steps of
   a) providing a nutritional composition comprising carbohydrates, protein, fat and optionally micronutrients, preferably in form of a powder or a liquid;
   b) adding the thickener composition according of any of embodiments 1 to 24;
   c) mixing the nutritional premix with the thickener composition;
   d) optionally adding water.
33. Method for providing patient nutrition comprising the following steps:
   a) providing patient food in liquid or fluid form, e.g. by pureeing;
   b) adding the thickener composition of any of embodiments 1 to 24;
   c) mixing the thickener composition with the patient food.
34. Method according to embodiment 32 or 33, wherein the patient nutrition has a temperature of more than 40°C and/or comprises animal protein, wherein the thickener composition comprises a cellulose.
35. Method according to embodiment 34, wherein the patient nutrition patient nutrition having a temperature of more than 40°C is left to cool after executing step c).

### EXAMPLES

### Preparation of thickened solutions

Thickened solutions for this study were prepared in three different stages (Nectar, Honey, and Pudding according to the definition of the National Dysphagia Diet (NOD), published in 2002 by the American Dietetic Association) in 100 mL of tap water. The thickened solutions were mixed using a whisk until smooth consistency solutions were obtained. After preparation, the solutions were left to stand for 15 minutes to recover the correct viscosity.

### Example 1: Effect of artificial saliva on solutions thickened with a starch-based thickener

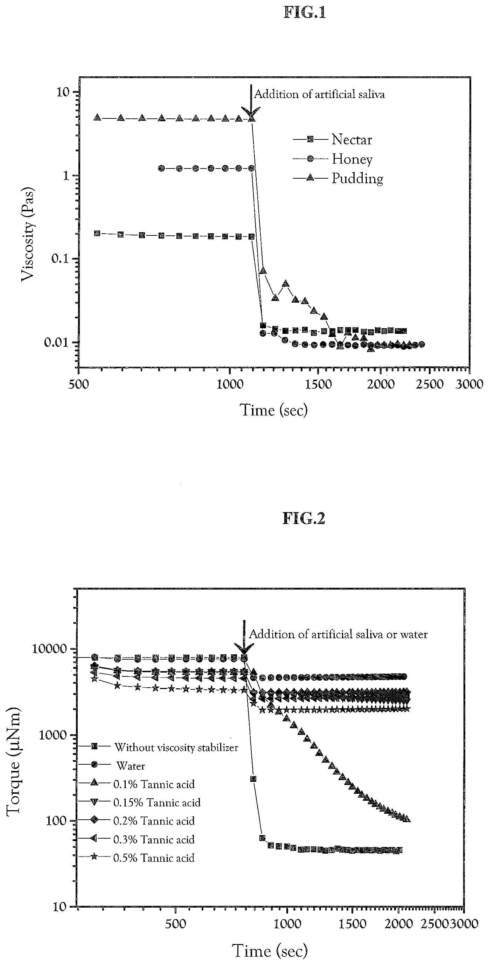

As shown in Fig. 1, at around swallowing shear rate, the viscosity of the three textures that are commonly used in dysphagia treatment (Nectar, Honey, and Pudding) adjusted by using a starch based thickener comprising 99.7 wt% modified maize starch and 0.3 wt% maltodextrin is reduced almost instantly to very low values upon addition of artificial saliva. After the addition of artificial saliva, the viscosity of the thickened solutions decreased up to three orders of magnitude within a few seconds. This reduction in viscosity of the thickened solutions may be problematic to dysphagia patients as the prescribed food texture is not maintained.

### Example 2: Effect of artificial saliva on solutions thickened with a starch-based thickener comprising a polyphenol viscosity stabilizer

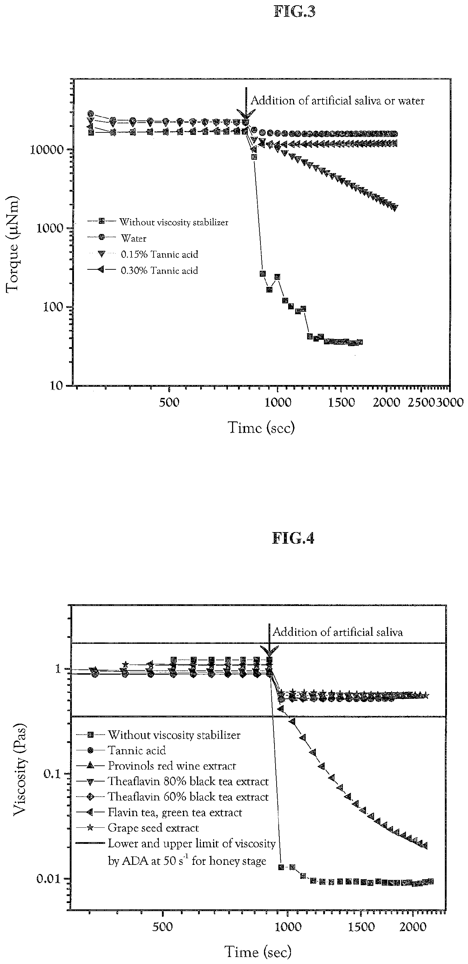

To study the inhibition effect of the polyphenol viscosity stabilizer, the same thickener as used in example 1 was reformulated with different concentrations of tannic acid as viscosity stabilizer. The concentration of the viscosity stabilizer was calculated in weight percent based on the total weight of the solution. As shown in Fig. 2, the decrease in viscosity is significantly reduced. This experiment was done for both honey (Fig. 2) and pudding (Fig. 3) consistencies.

### Example 3: Comparison of different polyphenol viscosity stabilizers at the same concentration

To study and compare the viscosity stabilizing capacity of different viscosity stabilizers, viscosity measurements were carried out on samples with a specific concentration of several viscosity stabilizers. The concentration was 0.2 wt% with respect to the total weight of the thickened solution. Fig. 4 shows the results for six different polyphenol viscosity stabilizers (tannic acid, red wine extract, black tea extract, grape seed extract, green tea extract). The same experiment was done for nectar and pudding consistencies (data not shown) and similar results to those for the honey consistency were obtained. One of the most important achievements is that, for the individual textures, even after being mixed with artificial saliva the viscosity of the solutions remains stabilized within the range of viscosities given by the American National Dietetic Association, 2002, at a shear rate of 50 s⁻¹. This is very important for the assurance of safety and efficiency of dysphagia treatment and in the nutrition of patients suffering from dysphagia.

### Example 4: Comparison of the effects of simulated and real saliva

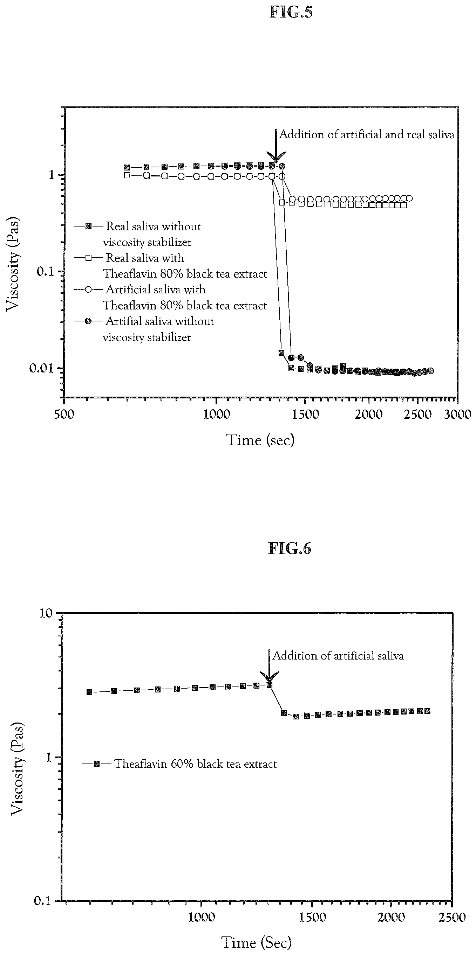

This experiment was carried out to verify if the effect of artificial saliva is similar to that of real saliva. As shown in Fig. 5, the effects of both artificial and real saliva on the starch-based thickener were comparable in both cases, with and without viscosity stabilizer (black tea extract).

### Example 5: Cellulose based thickener composition comprising Theaflavin as viscosity stabilizer

Fig. 6 shows the effect of artificial saliva on a cellulose-based thickener powder. This thickener powder contains 70% HPMC, 20% chemically modified maize starch, and 10% maltodextrin. It also contains black tea extract as polyphenol viscosity stabilizer, with polyphenol/starch ratio of 0.030:1 (wt/wt).

Generally, it is believed that the use of polyphenol viscosity stabilizers e.g. in the newly formulated thickener powders helps to improve and maintain the safety and health of dysphagia patients by stabilizing the viscosity of starch thickened patient nutritional product and thereby helping to avoid and / or reduce risks associated with swallowing a non-suitable food consistency.

### Example 6: Starch based thickener composition comprising tannic acid as viscosity stabilizer

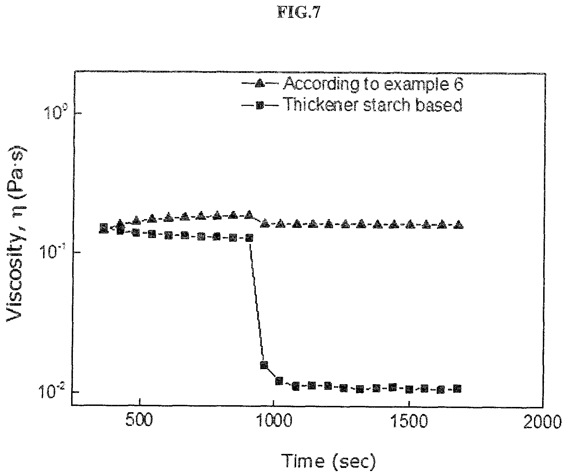

Fig. 7 compares the effects of human saliva on the viscosity of a thickened solution comprising 1.4 wt% of a thickener composition containing 39.2 wt% modified tapioca starch, 39.1 wt% Xanthan gum, 14.65 wt% Maltodextrin, 7 wt% hydroxypropyl methylcellulose and 0.05 wt% tannic acid and on a thickened solution comprising 4.5 wt% of a starch based thickener (comprising 99.7 wt% modified Maize starch and 0.3 wt% maltodextrin) respectively.

### METHODS

### Viscosity

The National Dysphagia Diet (NOD), published in 2002 by the American Dietetic Association, aims to establish standard terminology and practice applications of dietary texture modification in dysphagia management. The proposed terms for liquids and correlating viscosity ranges, at 25°C and a single shear rate of 50 s⁻¹, are: (1) Thin: 1-50 cP; (2) Nectar-like: 51-350 cP; (3) Honey-like: 351-1750 cP; (4) Pudding-like: >1750 cP. The viscosity measurements were carried out using a HAAKE MARS Advanced Modular Rheometer (Germany) fitted with helical ribbon mixer geometry and a small cylindrical cup. The (thickened) solution was loaded to the rheometer and measurement was started 10 minutes after loading. The saliva solution was added once the torque became constant with respect to time. All measurements were carried out at constant temperature of 20°C.

## Claims

1. A food thickener composition for adding to a nutritional product comprising
a) a polyphenol viscosity stabilizer,
b) a starch,
c) a cellulose, and
d) one or more additives, wherein the thickener composition comprises maltodextrin as an additive

2. The thickener composition according to claim 1, wherein the maltodextrin is comprised in an amount of 1-20 wt%, preferably 10-20 wt%, more preferably 14-15 wt% based on the total weight of the thickener composition.

3. The thickener composition according to any of the preceding claims, wherein the weight ratio of polyphenol viscosity stabilizer to starch is at least 0.001:1 or wherein the polyphenol viscosity stabilizer is comprised in an amount of 0.01-1 wt%, preferably 0.01-0.1 wt%, more preferably 0.05 wt% based on the total weight of the thickener composition.

4. The thickener composition according to any of the preceding claims, wherein the polyphenol viscosity stabilizer is selected from the group consisting of tannic acid, green tea extract, black tea extract, red wine extract, grape seed extract and mixtures thereof.

5. The thickener composition according to any of the preceding claims, wherein the starch is comprised in an amount of 30-55 wt%, preferably 35-45 wt%, more preferably 39-40 wt% based on the total weight of the thickener composition.

6. The thickener composition according to any of the preceding claims, wherein the starch is a chemically modified starch, preferably a chemically modified tapioca starch.

7. The thickener composition according to any of the preceding claims, wherein the cellulose is comprised in an amount of 2-15 wt%, preferably 5-10 wt%, more preferably 8-9 wt%, most preferably 7 wt% based on the total weight of the thickener composition.

8. The thickener composition according to any of the preceding claims, wherein the cellulose is chemically modified cellulose, preferably hydroxypropyl methyl cellulose (HPMC).

9. The thickener composition according to any of the preceding claims further comprising a gum.

10. The thickener composition according to claim 9, wherein the gum is comprised in an amount of 25-55 wt%, preferably 30-50 wt%, more preferably 35-45 wt%, most preferably 39-40 wt% based on the total weight of the thickener composition.

11. The thickener composition according to claim 9 or 10, wherein the gum is selected from the group consisting of agar, gum Arabic, guar gum, Gellan gum and Xanthan gum.

12. The thickener composition according to claim 9, 10 or 11, wherein the gum is Xanthan gum.

13. A food thickener composition according to any of the preceding claims for use in the treatment of dysphagia.

14. A food thickener composition according to any of the preceding claims for use in the treatment or prophylaxis of malnutrition or dehydration in patients suffering from dysphagia.

15. A food thickener composition according to any of claims 1 to 12 for use in the prophylaxis of aspiration pneumonia.

16. A food thickener composition according to any of claims 1 to 12 for use in the nutrition of patients suffering from dysphagia.

17. Nutritional composition comprising the food thickener composition according to any of claims 1 to 12.

18. Method for providing patient nutrition comprising the following steps:
a) providing patient food in liquid or fluid form;
b) adding the thickener composition of any of claims 1 to 12;
c) mixing the thickener composition with the patient food.

19. Method for providing patient nutrition comprising the following steps:
a) providing a nutritional composition;
b) adding the thickener composition of any of claims 1 to 12;
c) mixing the thickener composition with the nutritional composition;
d) optionally adding water.

20. Method according to claims 18 or 19, wherein the patient nutrition has a temperature of more than 40°C and/or comprises animal protein.

## Patentansprüche

1. Nahrungsmittelverdickerzusammensetzung zur Zugabe zu einem Nährprodukt, umfassend
a) einen Polyphenol-Viskositätsstabilisator,
b) eine Stärke,
c) eine Cellulose und
d) einen oder mehrere Zusätze, wobei die Verdickerzusammensetzung Maltodextrin als Zusatz umfasst.

2. Verdickerzusammensetzung nach Anspruch 1, wobei das Maltodextrin in einer Menge von 1 bis 20 Gew.%, vorzugsweise 10 bis 20 Gew.%, bevorzugter 14 bis 15 Gew.% enthalten ist, bezogen auf das Gesamtgewicht der Verdickerzusammensetzung.

3. Verdickerzusammensetzung nach einem der vorhergehenden Ansprüche, wobei das Gewichtsverhältnis von Polyphenol-Viskositätsstabilisator zu Stärke mindestens 0,001:1 beträgt, oder wobei der Polyphenol-Viskositätsstabilisator in einer Menge von 0,01 bis 1 Gew.%, vorzugsweise 0,01 bis 0,1 Gew.%, bevorzugter 0,05 Gew.% enthalten ist, bezogen auf das Gesamtgewicht der Verdickerzusammensetzung.

4. Verdickerzusammensetzung nach einem der vorhergehenden Ansprüche, wobei der Polyphenol-Viskositätsstabilisator ausgewählt ist aus der Gruppe bestehend aus Tanninsäure, Grünteeextrakt, Schwarzteeextrakt, Rotweinextrakt, Traubenkernextrakt und Mischungen davon.

5. Verdickerzusammensetzung nach einem der vorhergehenden Ansprüche, wobei die Stärke in einer Menge von 30 bis 55 Gew.%, vorzugsweise 35 bis 45 Gew.%, bevorzugter 39 bis 40 Gew.% enthalten ist, bezogen auf das Gesamtgewicht der Verdickerzusammensetzung.

6. Verdickerzusammensetzung nach einem der vorhergehenden Ansprüche, wobei die Stärke eine chemisch modifizierte Stärke ist, vorzugsweise eine chemisch modifizierte Tapiokastärke.

7. Verdickerzusammensetzung nach einem der vorhergehenden Ansprüche, wobei die Cellulose in einer Menge von 2 bis 15 Gew.%, vorzugsweise 5 bis 10 Gew.%, bevorzugter 8 bis 9 Gew.%, am meisten bevorzugt 7 Gew.% enthalten ist, bezogen auf das Gesamtgewicht der Verdickerzusammensetzung.

8. Verdickerzusammensetzung nach einem der vorhergehenden Ansprüche, wobei die Cellulose chemisch modifizierte Cellulose ist, vorzugsweise Hydroxypropylmethylcellulose (HPMC).

9. Verdickerzusammensetzung nach einem der vorhergehenden Ansprüche, ferner umfassend ein Gummi.

10. Verdickerzusammensetzung nach Anspruch 9, wobei das Gummi in einer Menge von 25 bis 55 Gew.%, vorzugsweise 30 bis 50 Gew.%, bevorzugter 35 bis 45 Gew.%, am meisten bevorzugt 39 bis 40 Gew.% enthalten ist, bezogen auf das Gesamtgewicht der Verdickerzusammensetzung.

11. Verdickerzusammensetzung nach Anspruch 9 oder 10, wobei das Gummi ausgewählt ist aus der Gruppe bestehend aus Agar, Gummi arabicum, Guar-Gummi, Gellan-Gummi und Xanthan-Gummi.

12. Verdickungszusammensetzung nach Anspruch 9, 10 oder 11, wobei das Gummi Xanthan-Gummi ist.

13. Nahrungsmittelverdickerzusammensetzung nach einem der vorhergehenden Ansprüche zur Verwendung in der Behandlung von Dysphagie.

14. Nahrungsmittelverdickerzusammensetzung nach einem der vorhergehenden Ansprüche zur Verwendung in der Behandlung oder Prophylaxe von Fehlernährung bzw. Mangelernährung oder Dehydrierung bei Patienten, die unter Dysphagie leiden.

15. Nahrungsmittelverdickerzusammensetzung nach einem der Ansprüche 1 bis 12 zur Verwendung in der Prophylaxe von Aspirationspneumonie.

16. Nahrungsmittelverdickerzusammensetzung nach einem der Ansprüche 1 bis 12 zur Verwendung in der Ernährung von Patienten, die unter Dysphagie leiden.

17. Nährzusammensetzung, die die Nahrungsmittelverdickerzusammensetzung gemäß einem der Ansprüche 1 bis 12 umfasst.

18. Verfahren zum Bereitstellen von Patientennährstoff, umfassend die folgenden Schritte:
a) Bereitstellen von Patientennahrung in flüssiger oder fließfähiger Form;
b) Zufügen der Verdickerzusammensetzung nach einem der Ansprüche 1 bis 12;
c) Mischen der Verdickerzusammensetzung mit der Patientennahrung.

19. Verfahren zum Bereitstellen von Patientennährstoff, umfassend die folgenden Schritte:
a) Bereitstellen einer Nährzusammensetzung;
b) Zufügen der Verdickerzusammensetzung nach einem der Ansprüche 1 bis 12;
c) Mischen der Verdickerzusammensetzung mit der Nährzusammensetzung;
d) gegebenenfalls Zufügen von Wasser.

20. Verfahren nach den Ansprüchen 18 oder 19, wobei der Patientennährstoff eine Temperatur von mehr als 40 °C aufweist und/oder tierisches Protein umfasst.

## Revendications

1. Composition d'épaississant alimentaire destinée à une addition à un produit nutritionnel, comprenant
a) un stabilisant de viscosité à base de polyphénol,
b) un amidon,
c) une cellulose, et
d) un ou plusieurs additifs, où la composition d'épaississant comprend des maltodextrines comme additif.

2. Composition d'épaississant selon la revendication 1, dans laquelle les maltodextrines sont comprises selon une quantité de 1-20% en poids, préférablement de 10-20% en poids, plus préférablement de 14-15% en poids, sur la base du poids total de la composition d'épaississant.

3. Composition d'épaississant selon l'une quelconque des revendications précédentes, dans laquelle le rapport pondéral du stabilisant de viscosité à base de polyphénol à l'amidon est d'au moins 0,001:1 ou où le stabilisant de viscosité à base de polyphénol est compris selon une quantité de 0,01-1% en poids, préférablement de 0,01-0,1% en poids, plus préférablement de 0,05% en poids, sur la base du poids total de la composition d'épaississant.

4. Composition d'épaississant selon l'une quelconque des revendications précédentes, dans laquelle le stabilisant de viscosité à base de polyphénol est choisi dans le groupe constitué par l'acide tannique, un extrait de thé vert, un extrait de thé noir, un extrait de vin rouge, un extrait de pépins de raisin et des mélanges de ceux-ci.

5. Composition d'épaississant selon l'une quelconque des revendications précédentes, dans laquelle l'amidon est compris selon une quantité de 30-55% en poids, préférablement de 35-45% en poids, plus préférablement de 39-40% en poids, sur la base du poids total de la composition d'épaississant.

6. Composition d'épaississant selon l'une quelconque des revendications précédentes, dans laquelle l'amidon est un amidon modifié chimiquement, préférablement un amidon de tapioca modifié chimiquement.

7. Composition d'épaississant selon l'une quelconque des revendications précédentes, dans laquelle la cellulose est comprise selon une quantité de 2-15% en poids, préférablement de 5-10% en poids, plus préférablement de 8-9% en poids, tout préférablement de 7% en poids, sur la base du poids total de la composition d'épaississant.

8. Composition d'épaississant selon l'une quelconque des revendications précédentes, dans laquelle la cellulose est une cellulose modifiée chimiquement, préférablement l'hydroxypropyl méthylcellulose (HPMC).

9. Composition d'épaississant selon l'une quelconque des revendications précédentes, comprenant en outre une gomme.

10. Composition d'épaississant selon la revendication 9, dans laquelle la gomme est comprise selon une quantité de 25-55% en poids, préférablement de 30-50% en poids, plus préférablement de 35-45% en poids, tout préférablement de 39-40% en poids, sur la base du poids total de la composition d'épaississant.

11. Composition d'épaississant selon la revendication 9 ou 10, dans laquelle la gomme est choisie dans le groupe constitué par l'agar-agar, la gomme arabique, la gomme guar, la gomme gellane et la gomme xanthane.

12. Composition d'épaississant selon la revendication 9, 10 ou 11, dans laquelle la gomme est la gomme xanthane.

13. Composition d'épaississant alimentaire selon l'une quelconque des revendications précédentes, destinée à une utilisation dans le traitement de la dysphagie.

14. Composition d'épaississant alimentaire selon l'une quelconque des revendications précédentes, destinée à une utilisation dans le traitement ou la prophylaxie de la malnutrition ou de la déshydratation chez des patients souffrant de dysphagie.

15. Composition d'épaississant alimentaire selon l'une quelconque des revendications 1 à 12, destinée à une utilisation dans la prophylaxie de la pneumonie par aspiration.

16. Composition d'épaississant alimentaire selon l'une quelconque des revendications 1 à 12, destinée à une utilisation dans la nutrition de patients souffrant de dysphagie.

17. Composition nutritionnelle, comprenant la composition d'épaississant alimentaire selon l'une quelconque des revendications 1 à 12.

18. Méthode destinée à apporter une nutrition à un patient, comprenant les étapes suivantes, consistant à :
a) apporter au patient des aliments sous forme liquide ou fluide ;
b) ajouter la composition d'épaississant selon l'une quelconque des revendications 1 à 12 ;
c) mélanger la composition d'épaississant avec les aliments du patient.

19. Méthode destinée à apporter une nutrition à un patient, comprenant les étapes suivantes, consistant à :
a) fournir une composition nutritionnelle ;
b) ajouter la composition d'épaississant selon l'une quelconque des revendications 1 à 12 ;
c) mélanger la composition d'épaississant avec la composition nutritionnelle ;
d) éventuellement, ajouter de l'eau.

20. Méthode selon les revendications 18 à 19, dans laquelle la nutrition du patient est à une température supérieure à 40°C et/ou comprend des protéines animales.
